# FASCICULE DE BREVET EUROPEEN

(11) **EP 0 566 492 B1**
(45) Date de publication et mention de la délivrance du brevet: **04.09.2002**
(21) Numéro de dépôt: 93400984.6
(22) Date de dépôt: 15.04.1993
(51) Int. Cl.: G06F 1/00

(54) **Procédé d'authentification d'un ensemble informatique à partir d'une disquette informatique**
Verfahren zur Authentifizierung eines Datenverarbeitungssystems aus einer Computerdiskette
Method for authenticating a data processing system from a computer diskette

(30) Priorité: 17.04.1992 FR 9204792
(43) Date de publication de la demande: 20.10.1993
(73) Titulaire: FRANCE TELECOM, 75015 Paris (FR)
(72) Inventeur: Allegre, François, F-94270 Kremlin Bicetre (FR); Arditti, David, F-92140 Clamart (FR); Campana, Mireille, F-92140 Clamart (FR)
(74) Mandataire: Dubois-Chabert, Guy

(56) Documents cités:
- EP-A- 0 425 053
- WO-A-86/01323
- DE-A- 3 512 785
- PATENT ABSTRACTS OF JAPAN vol. 12, no. 32 (P-661)(2879) 30 Janvier 1988
- ADVANCES IN CRYPTOLOGY- CRYPTO 89 PROCEEDINGS, SPRINGER-VERLAG 1989, NEW YORK pages 74 - 79 P. BARRETT AND R. EISELE 'The smart diskette. A universal user token and personal crypto-engine'
- COMPUTER COMMUNICATION TECHNOLOGIES FOR THE 90'S, ELSEVIER SCIENCE PUBLISHERS 1988, AMSTERDAM pages 391 - 396 B. KOWALSKI AND K. WOLFENSTETTER 'Security for electronic mail and telematic services'

## Description

L'invention concerne un procédé pour authentifier un utilisateur travaillant sur un terminal, à partir d'une disquette pouvant être lue par ledit terminal ainsi que d'un serveur sur lequel le terminal est connecté.

Dans les systèmes informatiques actuels, la protection des données joue un rôle de plus en plus important. En effet, la qualité du système informatique dépend de manière décisive de la sécurité de l'échange de données à l'intérieur du système. En effet, on cherche de plus en plus à sécuriser l'accès au système, c'est-à-dire que l'on cherche à contrôler si les personnes utilisant le système sont autorisées à l'utiliser, les personnes non-autorisées devant alors être refusées par ledit système.

Un mode de réalisation simple, mais n'offrant pas une sécurité absolue, consiste à contrôler l'accès au système informatique par la vérification du mot de passe connu uniquement de l'utilisateur autorisé et souvent changé afin de limiter la possibilité que des utilisateurs non-autorisés découvrent ce mot de passe. Cependant, il y a de forts risques que les mots de passe soient trouvés ou interceptés par des personnes non-autorisées désireuses d'utiliser le système informatique. De plus, les mots de passe choisis par les utilisateurs sont souvent faciles à trouver par recherche exhaustive et, cependant, ce sont eux qui, la plupart du temps, sont utilisés car les mots de passe aléatoires générés par les systèmes sont impossibles à retenir. La recherche exhaustive en utilisant un dictionnaire de mots de passe est souvent possible sans tentative de connexion, pour peu que l'on sache lire le fichier des mots de passe cryptés.

Une autre possibilité de sécuriser un système informatique consiste à coder/décoder les informations transmises à l'intérieur du système. Ce procédé de codage/décodage est de plus en plus fréquent. Il utilise généralement des dispositifs annexes généralement connectés au terminal. Ces dispositifs sont du type calculettes, jetons, cartes à puce, ou encore, authentifieur vidéotex.

Les dispositifs de codage/décodage les plus fréquents utilisent des cartes à puce. Ils nécessitent donc une pluralité de lecteurs de cartes, chaque lecteur étant connecté sur l'un des terminaux du système informatique.

Un tel système informatique a donc pour principal inconvénient d'être coûteux car il nécessite la connexion d'un lecteur par terminal. De plus, ce système de cartes à mémoire n'est utilisable qu'à partir de certains terminaux (tels que des minitels®, par exemple). Un système de ce type, utilisant des cartes à puce pour sa sécurisation, est décrit dans le brevet européen publié sous le numéro EP-0 400 441.

En outre, un procédé de sécurisation des échanges entre un terminal vidéotex et un serveur est décrit, notamment, dans le brevet européen publié sous le numéro EP-A1-0 317 400 et dans le brevet français publié sous le numéro FR-A-2 663 141 déposé au nom du Service d'Etudes communes des Postes et Télécommunications (SEPT).

Un procédé, comme celui décrit dans les deux brevets précédemment cités, a également comme inconvénients de ne pouvoir fonctionner que dans un système comportant des minitels®.

Le document WO-A-8 601 323 décrit un système de sécurité dans lequel chaque utilisateur pouvant accéder au système, dispose d'un terminal personnel couplé au processeur central. Ce système ne permet pas d'authentifier un utilisateur sur n'importe quel terminal du réseau.

Le document DE-A-3 512 785 décrit un procédé de sécurité mis en oeuvre sur un système comportant un terminal et un support de données, tel qu'une disquette, sur lequel un mot de passe est inscrit à un emplacement mémoire donné. Ce procédé présente le risque que le mot de passe puisse être lu par un fraudeur sur la disquette.

L'abrégé du brevet japonais JP-A-62 184 563 décrit un système utilisant un mot de passe, écrit sur la disquette, qui est rechiffré et changé à chaque session. Ce système présente également l'inconvénient que le mot de passe est écrit sur la disquette.

Le procédé selon l'invention tel que défini dans la revendication 1 permet de remédier aux inconvénients des procédés décrits ci-dessus. Il permet, en effet, l'authentification par signature d'aléa à partir d'une disquette pouvant être lue par chaque terminal du système informatique. Il permet ainsi de remplacer la carte à puce par un support banal telle qu'une disquette. Il est apte à rendre des services identiques à ceux d'un procédé utilisant la carte à puce (à savoir, une authentification simple ou réciproque et une génération de clé de session).

Contrairement à la carte à puce, la disquette n'a aucune zone secrète dans laquelle peut être mémorisée une clé secrète. Aussi, la clé secrète est donc chiffrée avant d'être mémorisée sur la disquette. Le chiffrement de cette clé secrète est réalisé à partir d'un algorithme de chiffrement mis en oeuvre à l'aide d'un mot de passe connu de l'utilisateur. Ce mot de passe ne transite pas par les moyens de communication (ligne de transmission, par exemple) reliant le terminal au serveur du système informatique. Ce mot de passe n'est, de plus, pas présent sur la disquette. Aussi, il ne peut pas être retrouvé par essais exhaustifs effectués par une personne ayant dérobé la disquette ou son contenu.

Le système informatique utilisé pour mettre en oeuvre le procédé de l'invention comporte, outre le terminal, un serveur et un processeur de sécurité connectés ensemble. Leurs échanges d'informations ne sont pas décrits dans cette description car ils sont connus de l'homme de l'art.

De façon plus précise, l'invention concerne un procédé d'authentification d'un premier ensemble informatique par un second ensemble informatique, dans lequel :
- le premier ensemble envoie au second ensemble un code d'identité ;
- le second ensemble vérifie cette identité et, en cas d'accord, envoie au premier ensemble un premier nombre aléatoire ;
- le premier ensemble informatique code le premier nombre aléatoire à l'aide d'un algorithme de signature defini par une clé;
- le second ensemble code le premier nombre aléatoire à l'aide de l'algorithme de signature et de la clé pour obtenir une signature de référence ; puis
- le premier ensemble envoie le premier nombre aléatoire signé au second ensemble ;
- le second ensemble vérifie si le premier nombre aléatoire signé correspond à la signature de référence ; et si c'est le cas, le premier ensemble est connecté au second ensemble.

Ce procédé est caractérisé en ce que le premier ensemble informatique est un terminal équipé d'une disquette sur laquelle a été écrite la clé qui a été auparavant chiffrée à l'aide d'un algorithme de chiffrement utilisant un premier mot de passe fourni par l'utilisateur du terminal, ce terminal étant apte à lire la clé ainsi chiffrée sur la disquette et à appliquer un algorithme de déchiffrement (inverse de l'algorithme de chiffrement) à l'aide du premier mot de passe et à délivrer ainsi la clé de l'algorithme de signature ainsi que le mot de passe pour signer le nombre aléatoire.

Après vérification du code d'identité envoyé par le terminal, le second ensemble déterminer la clé, de façon avantageuse, en mettant en oeuvre une fonction de diversification appliquée à une clé mère mémorisée dans le second ensemble, ledit second ensemble mémorisant la clé ainsi déterminée durant toute la procédure d'authentification. Préférentiellement, cette clé est identique à celle qui est codée sur la disquette.

En outre, le procédé consiste, dans le cas d'un changement du premier mot de passe en un second mot de passe, à déchiffrer la clé chiffrée à l'aide de l'algorithme de déchiffrement et du premier mot de passe et à re-chiffrer la clé ainsi déchiffrée à l'aide de l'algorithme de chiffrement et du second mot de passe, le changement du mot de passe ne s'effectuant qu'après la validation fournie par le succès de la procédure d'authentification.

D'autres avantages et caractéristiques de l'invention apparaîtront au cours de la description qui va suivre, donnée à titre illustratif mais nullement limitatif, en référence aux dessins dans lesquels :
- la figure 1 représente le schéma fonctionnel de la détermination de la clé secrète et de la clé secrète chiffrée, à partir de la clé mère ;
- la figure 2 représente le schéma fonctionnel de l'étape de signature au moyen de la clé secrète chiffrée contenue sur la disquette ;
- la figure 3 représente le schéma fonctionnel de l'étape de vérification de la signature de la clé secrète ;
- la figure 4 représente un schéma fonctionnel de la fonction d'authentification mutuelle entre un terminal et le serveur et, inversement, entre le serveur et le terminal. Elle représente également, de façon fonctionnelle, la fonction de détermination d'une clé de session partagée par le terminal et le serveur ; l'algorithme représenté est celui contenu sur la disquette ;
- la figure 5 représente un schéma fonctionnel des mêmes fonctions que celles représentées sur le schéma de la figure 4, l'algorithme représenté étant celui mémorisé sur le serveur.

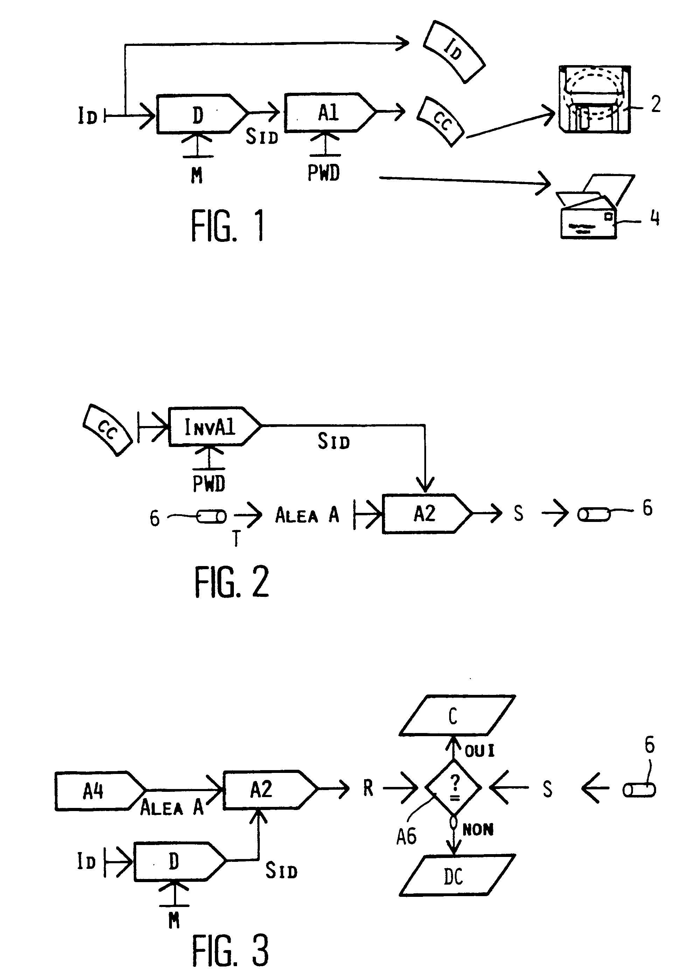

Sur la figure 1, on a représenté le schéma fonctionnel de l'opération de détermination de la clé secrète SID ainsi que de la clé secrète chiffrée CC.

En effet, le procédé selon l'invention consiste à garder en mémoire, sur le serveur, une clé secrète SID et, sur la disquette, cette même clé secrète sous une forme chiffrée. La clé secrète chiffrée est nommée clé CC. On considère que, à l'origine sur la disquette, se trouve un programme utilisateur PU ainsi que le code identité Id de l'utilisateur. Ce code identité est un code non-secret, représentatif de l'utilisateur ; ce peut être le nom de l'utilisateur.

Les étapes de la "fabrication" de la disquette consiste en la détermination de la clé secrète SID, ainsi que de la clé secrète chiffrée CC. L'administrateur du serveur crée une disquette pour l'utilisateur en réalisant, comme représentées sur le diagramme fonctionnel de la figure 1, les étapes suivantes :
* Cet administrateur saisit l'identité de l'utilisateur sur la console du serveur. Cette identité est alors écrite sur la disquette et est transmise au processeur de sécurité attaché au serveur.
* Le processeur de sécurité, qui a en mémoire une clé mère M, met en oeuvre une fonction de diversification D ayant pour variable la clé mère M et le code d'identité Id. De l'application de cette fonction de diversification D, résulte la clé secrète SID.
* Lorsque la clé secrète SID a été déterminée, le processeur de sécurité met en oeuvre un algorithme A1 de chiffrement utilisant le mot de passe PWD fixé à cet instant par l'administrateur et fourni au serveur par saisie sur le terminal. Ce mot de passe est fourni à l'utilisateur par un canal sûr, référencé 4, ce canal pouvant être, par exemple, une enveloppe secrète.
* Il résulte, de cet algorithme A1 de chiffrement, une clé secrète chiffrée CC qui est en fait la clé secrète SID sous sa forme chiffrée.
* Cette clé secrète chiffrée CC est inscrite sur la disquette référencée 2.

On rappelle que le mot de passe PWD est connu de l'utilisateur mais que, bien entendu, comme tout mot de passe, il est tenu secret par l'utilisateur qui a été informé de son mot de passe grâce à, par exemple, une enveloppe secrète. Aussi, on comprend bien que le mot de passe, propre à l'utilisateur et fourni par l'administrateur, n'est employé qu'une seule fois lors de l'opération de personnalisation de la disquette, c'est-à-dire l'opération de chiffrement de la clé SID. Ce mot de passe fixé par l'administrateur est chargé par l'utilisateur lors de la première connexion selon le procédé décrit précédemment.

Lorsque cette opération de personnalisation de la disquette a été effectuée, la demande de connexion du terminal sur le serveur peut être réalisée. Cette demande de connexion consiste à envoyer le code d'identité Id de la disquette vers le serveur qui, après vérification de ce code d'identité, génère un code aléatoire nommé ALEA-A et retransmet ce nombre aléatoire ALEA-A au terminal.

A la réception de ce nombre aléatoire ALEA-A, le terminal exécute un algorithme de signature écrit sur la disquette et consistant à signer le nombre aléatoire ALEA-A à l'aide de la clé secrète SID écrite sur ladite disquette après déchiffrement de celle-ci. On obtient alors le nombre aléatoire signé S qui est transmis au serveur. Ce dernier vérifie la signature du nombre aléatoire ALEA-A par un test de comparaison du nombre aléatoire signé S avec un résultat (ou signature de référence) R qu'il a déterminé lui-même à partir d'un algorithme décrit ultérieurement.

Pour l'utilisateur, l'authentification se fait de façon quasi-transparente. En effet, l'utilisateur, lors de la demande de connexion de son terminal au serveur, reçoit sur son terminal un nombre aléatoire de la part dudit serveur. Il introduit alors sa disquette dans le terminal et le programme utilisateur PU lui demande de rentrer son mot de passe PWD. Ce programme utilisateur PU déchiffre la clé secrète chiffrée CC et signe le nombre aléatoire ALEA-A envoyé par le serveur. Cette signature est ensuite envoyée au serveur, sans que l'utilisateur n'intervienne à nouveau.

La figure 2 représente, sous forme d'un diagramme fonctionnel, cette étape de déchiffrement de la clé secrète chiffrée CC et de signature du nombre aléatoire ALEA-A par ladite clé. De façon plus précise, ce diagramme fonctionnel montre l'opération de déchiffrement de la clé chiffrée CC. En effet, ladite clé chiffrée CC est utilisée, ainsi que le mot de passe PWD, par un algorithme INVA1 de déchiffrement de la clé secrète chiffrée. Cet algorithme de déchiffrement permet de retrouver, à partir de la clé secrète chiffrée écrite sur la disquette et du mot de passe de l'utilisateur, la clé secrète SID.

Au cours de la transmission T, le nombre aléatoire ALEA-A est envoyé du serveur vers le terminal à l'aide du moyen de communication représenté par la ligne de transmission 6.

L'algorithme A2 de signature utilise la clé secrète SID pour signer l'ALEA-A et donc générer une signature (ou nombre aléatoire signé) S. Cette signature S est transmise par la ligne de transmission 6 au serveur.

Les algorithmes A1 de chiffrement et A2 de signature ne sont pas précisément décrits dans cette description car ils sont de type tout à fait connu de l'homme de l'art.

En outre, on précise que l'algorithme INVA1 de déchiffrement correspond à l'algorithme inverse de l'algorithme A1 de chiffrement, et que le mot de passe PWD de l'utilisateur est le même pour l'algorithme de déchiffrement que celui utilisé dans l'algorithme de chiffrement.

La figure 3 montre le diagramme fonctionnel du traitement réalisé à partir du serveur et du processeur de sécurité attaché au serveur. Le processeur de sécurité qui détient la clé mère M, reconstitue, à partir du code d'identité Id et de la fonction de diversification D, la clé secrète SID. L'ALEA-A, généré par la générateur aléatoire A4, est utilisé ainsi que la clé secrète SID par l'algorithme A2 de signature. Cet algorithme A2 consiste en ce que le processeur de sécurité calcule lui aussi la signature de l'ALEA-A. Cette signature de l'ALEA-A est appelée signature de référence ; elle est notée R. Le processeur de sécurité effectue un test A6 de comparaison de la signature de référence R calculée par lui-même avec la signature S reçue du terminal. Lorsque la signature de référence R est identique à la signature S reçue, le processeur de sécurité autorise la connexion (représentée par le bloc fonctionnel C) du terminal sur le serveur. Dans le cas inverse, c'est-à-dire si la signature de référence R et la signature reçue S ne sont pas identiques, le processeur de sécurité demande la déconnexion (représentée par le bloc DC, sur la figure) du terminal sur le serveur.

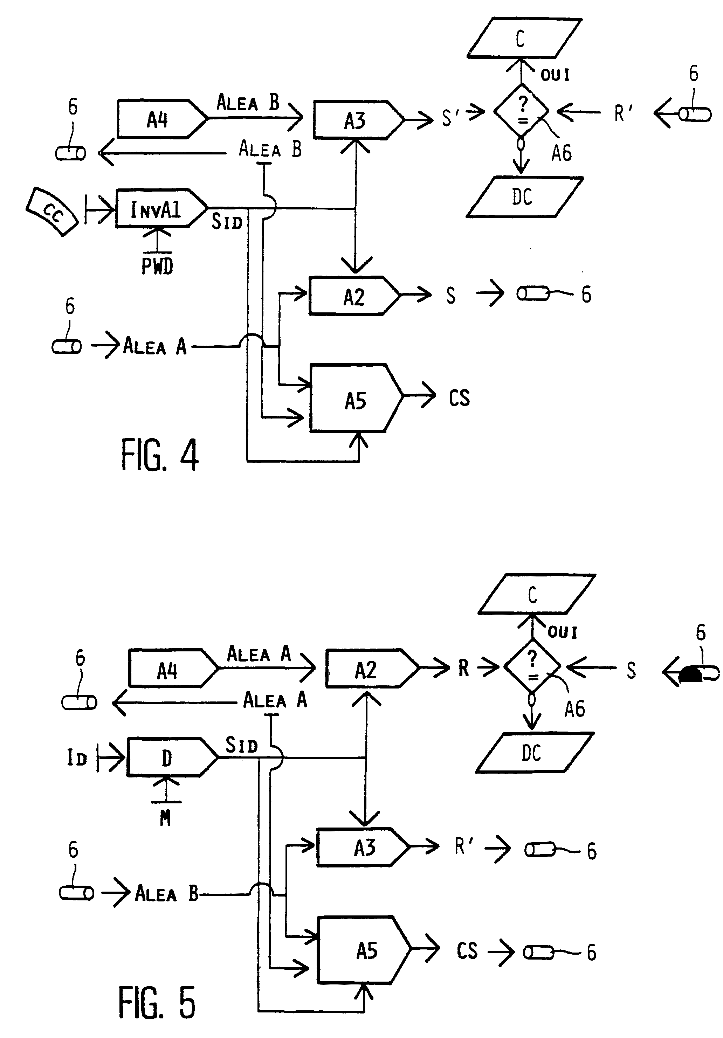

Sur la figure 4, on a représenté le programme écrit sur la disquette dans le cas d'une procédure d'authentification mutuelle.

On entend par authentification mutuelle, à la fois l'authentification de l'utilisateur par le serveur et l'authentification du serveur par l'utilisateur.

Ce procédé permet également de déterminer une clé de session partagée entre l'utilisateur et le serveur et permettant de sécuriser l'échange des messages entre le terminal et le serveur.

De façon plus précise, cette authentification mutuelle consiste à réaliser, sur la disquette et sur le serveur, des opérations symétriques. Aussi, le programme écrit sur la disquette, consiste à signer l'ALEA-A reçu du serveur et, d'autre part, à déterminer une signature S' à partir d'un second nombre aléatoire ALEA-B généré également par le générateur aléatoire A4 de la disquette et transmis au serveur.

Aussi, ce programme permet, de façon parallèle, de générer par un générateur aléatoire A4, un nombre aléatoire ALEA-B qui va être signé à l'aide d'un algorithme de signature A3. Cet ALEA-B signé est noté S'. Parallèlement, l'algorithme A2 de signature de l'ALEA-A par la clé secrète SID est réalisé comme décrit précédemment dans la description de la figure 2. Cet ALEA-A signé est référencé S et est transmis au serveur par l'intermédiaire de la ligne de transmission 6.

En outre, un algorithme A5 de fabrication de la clé de session permet de déterminer ladite clé de session à partir de la clé secrète SID, de l'ALEA-A et de l'ALEA-B. Cette clé de session, notée CS, est conservée par le programme de la disquette durant toute la durée de la connexion.

Le test A6, identique à celui décrit dans la description de la figure 3, permet de comparer la signature S' de l'ALEA-B avec la signature de référence R' reçue du serveur. Tout comme cela a été décrit pour la figure 3, lorsque la signature S' et la signature R' sont identiques, la disquette autorise la connexion du serveur avec le terminal. A l'opposé, lorsque la signature S' de l'ALEA-B et la signature R' de référence ne sont pas équivalentes alors la disquette demande la déconnexion d'avec le serveur.

La figure 5 montre, sous forme fonctionnelle, le programme d'authentification mutuelle écrit sur le serveur. Ce programme est symétrique du programme mémorisé sur la disquette et qui vient d'être décrit. En effet, le processeur de sécurité recherche la clé secrète SID à partir de la fonction de diversification D appliquée au code d'identité Id et à la clé mère M. L'ALEA-A généré par le générateur aléatoire A4, qui a été transmis à la disquette par la ligne 6, est signé par l'algorithme de signature A2 à l'aide de la clé secrète SID. Cet ALEA-A signé est appelé R et est comparé, par le test de comparaison A6, à la signature S reçue du terminal. De même que lors de la description des figures précédentes, lorsque les signatures R et S sont identiques, la connexion entre le terminal et le serveur est autorisée et lorsque les signatures R et S ne sont pas identiques, la déconnexion du terminal avec le serveur est demandée.

Parallèlement à ce traitement de l'ALEA-A, l'ALEA-B reçu de la disquette est utilisé par l'algorithme A3 de signature qui calcule la signature de référence R' de l'ALEA-B, et ce à partir de la clé secrète SID. Le serveur envoie cette signature de référence R' à la disquette.

Tout comme le programme écrit sur la disquette, l'ALEA-B et l'ALEA-A, ainsi que la clé secrète SID, permettent de fabriquer une clé de session CS à l'aide de l'algorithme A5 de fabrication de clés de session. Cette clé de session est conservée par le serveur pendant la durée de la connexion.

On comprend, d'après cette description, qu'une éventuelle écoute sur les moyens de communication entre le terminal et le serveur ne permet de déterminer ni le mot de passe ni les différentes clés car les informations circulant sur lesdits moyens de communication ne permettent pas de les recalculer.

De plus, un utilisateur non autorisé qui trouverait ou volerait la disquette, ne pourrait essayer les mots de passe qu'en faisant des tentatives de connexion, du fait de l'absence de redondance sur la disquette.

Le procédé selon l'invention a de plus pour avantages de permettre un changement de mot de passe sans risque car ce changement est réalisé après une connexion réussie, ce qui assure la validité de la clé secrète SID. De façon plus précise, lorsque la connexion entre le terminal et le serveur a été établie, la clé secrète chiffrée CC est déchiffrée à partir de l'algorithme INVA1 de déchiffrement et à partir du premier mot de passe (c'est-à-dire l'ancien mot de passe que l'on veut changer). On a ainsi retrouvé la clé secrète SID qui est utilisée par un algorithme de chiffrement A1 avec le second mot de passe (c'est-à-dire le nouveau mot de passe) pour créer une nouvelle clé secrète chiffrée. Cette nouvelle clé secrète chiffrée sera écrite sur la disquette à la place de l'ancienne clé secrète chiffrée CC.

Ce procédé a donc pour avantages de permettre la sécurité du mot de passe qui restera en local, c'est-à-dire, qu'il ne sera à aucun moment transmis sur les moyens de communication reliant le terminal et le serveur, moyens sur lesquels une écoute est possible.

De plus, dans le cas où une pluralité de serveurs sont attachés à un même processeur de sécurité, ce procédé permet la connexion à plusieurs serveurs à partir d'une même disquette.

En outre, le système d'authentification par cartes à puce et le système d'authentification à partir d'une disquette peuvent être compatibles dans le cas où la disquette et la carte à puce comportent le même algorithme.

## Revendications

1. Procédé d'authentification d'un premier ensemble informatique par un second ensemble informatique dans lequel :
- le premier ensemble envoie au second ensemble un code d'identité (Id) ;
- le second ensemble vérifie cette identité et, en cas d'accord, envoie au premier ensemble un premier nombre aléatoire (ALEA-A) ;
alors :
* le premier ensemble code le premier nombre aléatoire à l'aide d'un algorithme de signature (A2) défini par une clé (SID) et
* le second ensemble code le premier nombre aléatoire à l'aide de l'algorithme de signature (A2) et de la clé (SID) pour obtenir une signature de référence (R) ; puis
- le premier ensemble envoie le premier nombre aléatoire signé (S) au second ensemble ;
- le second ensemble vérifie (A6) si le premier nombre aléatoire signé (S) correspond à la signature de référence (R) ; et si c'est le cas, le premier ensemble est connecté au second ensemble ;
**caractérisé en ce que** le premier ensemble informatique est un terminal équipé d'une disquette sur laquelle a été écrite sans redondance la clé (SiD) qui a été chiffré à l'aide d'un algorithme de chiffrement (A1) utilisant un premier mot de passe (PWD) fourni par l'utilisateur du terminal, ce terminal étant apte à lire la clé ainsi chiffrée (CC) sur la disquette et à appliquer un algorithme de déchiffrement de signature (INVA1) ainsi que le premier mot de passe pour obtenir la clé nécessaire à la signature du nombre aléatoire.

2. Procédé selon la revendication 1, **caractérisé en ce qu'**il consiste, dans le cas d'un changement du premier mot de passe en un second mot de passe, à déchiffrer la clé chiffrée à l'aide de l'algorithme de déchiffrement et du premier mot de passe, à effectuer une connexion pour valider la clé et à re-chiffrer la clé ainsi déchiffrée à l'aide de l'algorithme de chiffrement et du second mot de passe.

3. Procédé selon la revendication 1 ou 2, **caractérisé en ce qu'**il consiste en la détermination, par le premier ensemble et par le second ensemble, d'une clé secrète de session commune auxdits premier et second ensembles.

## Patentansprüche

1. Verfahren zur Authentifizierung einer ersten Datenverarbeitungsanlage mittels einer zweiten Datenverarbeitungsanlage, in dem:
- die erste Anlage der zweiten Anlage einen Identifizierungscode (Id) schickt;
- die zweite Anlage diese Identifizierung verifiziert und im Fall der Zustimmung der ersten Anlage eine erste Zufallszahl (ALEA-A) schickt;
- dann:
• die erste Anlage die erste Zufallszahl mit Hilfe eines Signaturalgorithmus (A2) codiert, der von einem Schlüssel (SID) definiert ist; und
• die zweite Anlage die erste Zufallszahl mit Hilfe des Signaturalgorithmus (A2) und des Schlüssels (SID) codiert, um einer Referenzsignatur (R) zu erhalten; darauf
- die erste Anlage die signierte erste Zufallszahl (S) zur zweiten Anlage schickt;
- die zweite Anlage verifiziert (A6), ob die signierte erste Zufallszahl (S) der Referenzsignatur (R) entspricht; und wenn dies der Fall ist, die erste Anlage mit der zweiten Anlage verbunden wird;
**dadurch gekennzeichnet,**
**dass** die erste Datenverarbeitungsanlage ein Terminal ist, das mit einer Diskette ausgerüstet ist, auf der ohne Redundanz der Schlüssel (SID) geschrieben ist, der mittels eines Verschlüsselungsalgorithmus (A1) unter Verwendung eines vom Benutzer des Terminals bereitgestellten ersten Kennworts (PWD) verschlüsselt worden ist, wobei dieses Terminal zum Lesen des auf diese Weise verschlüsselten Schlüssels (CC) auf der Diskette und zum Anwenden eines Algorithmus zum Entschlüsseln der Signatur (INVA1) sowie des ersten Kennworts zum Erhalten des für die Signierung der Zufallszahl erforderlichen Schlüssels eingerichtet ist.

2. Verfahren nach Anspruch 1,
**dadurch gekennzeichnet,**
**dass** es in dem Fall eines Wechsels des ersten Kennworts in ein zweites Kennwort darin besteht, den verschlüsselten Schlüssel mit Hilfe des Entschlüsselungsalgorithmus und dem ersten Kennwort zu entschlüsseln, eine Verbindung herzustellen, um den Schlüssel zu überprüfen, und den auf diese Weise entschlüsselten Schlüssel mit Hilfe des Verschlüsselungsalgorithmus und dem zweiten Kennwort wieder zu verschlüsseln.

3. Verfahren nach Anspruch 1 oder 2,
**dadurch gekennzeichnet,**
**dass** es in der Bestimmung eines geheimen Sitzungsschlüssels für die erste Anlage und für die zweite Anlage besteht, wobei der Schlüssel der besagten ersten Anlage und der besagten zweiten Anlage gemein ist.

## Claims

1. Method for authenticating a first data processing unit by a second data processing unit in which:
- the first unit sends an identity code (Id) to the second unit,
- the second unit verifies said identity and, in the case of agreement, sends to the first unit a first random number (ALEA-A),
- then, the first unit codes the first random number with the aid of a signature algorithm (A2) defined by a key (SID) and
- the second unit codes the first random number with the aid of the signature algorithm (A2) and the key (SID) to obtain a reference signature (R), then
- the first unit sends the first signed random number (S) to the second unit,
- the second unit (A6) verifies whether the first signed random number (S) corresponds to the reference signature (R) and, if this is the case, the first unit is connected to the second unit,
**characterized in that** the first data processing unit is a terminal equipped with a floppy disk on which has been written without redundancy the key (SID) enciphered with the aid of an enciphering algorithm (A1) using a first password (PWD) supplied by the terminal user, said terminal being able to read the thus enciphered key (CC) on the floppy disk and apply a signature deciphering algorithm (INVAI), as well as the first password to obtain the key necessary for the signature of the random number.

2. Method according to claim 1, **characterized in that**, should the first password be changed to a second password, it consists of deciphering the ciphered key with the aid of the deciphering algorithm and the first password, of effecting a connection so as to validate the key, and of reciphering the deciphered key with the aid of the ciphering algorithm and the second password.

3. Method according to claim 1, **characterized in that** it consists of having a session secret key common to said first and second units being determined by the first unit and the second unit.
